# EUROPÄISCHE PATENTANMELDUNG

(11) **EP 1 525 795 A1**
(43) Veröffentlichungstag der Anmeldung: **27.04.2005**
(21) Anmeldenummer: 04024725.6
(22) Anmeldetag: 16.10.2004
(51) Int. Cl.: A01M 7/00

(54) **Landwirtschaftliche Verteilmaschine**

(30) Priorität: 23.10.2003 DE 10349319
(71) Anmelder: Amazonen-Werke H. Dreyer GmbH & Co. KG, 49205 Hasbergen (DE)
(72) Erfinder: Oberheide, Friedrich, 49143 Bissendorf (DE)

(57) **Zusammenfassung**

Landwirtschaftliche Verteilmaschine mit einem Rahmen, Vorratsbehälter und Verteilergestänge (1), welches in eine sich quer zur Fahrtrichtung erstreckende gestreckte Arbeitsstellung und in eine zusammengefaltete Transportstellung bringbar ist und aus einem am Rahmen höhenverstellbar angeordneten Mittelteilrahmen (2) und sich hieran beiderseits mittels Gelenken angeordneten und zusammenfaltbaren Seitenauslegern (3,4) besteht, wobei zwischen dem Mittelteilrahmen (2) und jedem Seitenausleger (3,4) jeweils ein vorzugsweise als Hydraulikzylinder ausgebildete Stellelement (9) zum Ein- und Ausfalten des Seitenauslegers angeordnet ist und jedem Seitenausleger ein vorzugsweise als Hydraulikzylinder ausgebildetes Anwinkelmittel (11) zum Anwinkeln des Seitenauslegers um eine in Fahrtrichtung verweisende Achse zugeordnet ist. Um ein einfach ausgebildetes unteres Gelenk (7) zur Anlenkung des Seitenauslegers an dem Mittelteilrahmen zu schaffen, welches sowohl das Einfalten wie auch das Anwinkeln des Seitenauslegers ermöglicht, ist vorgesehen, dass das untere Gelenk (7), mittels welchen der jeweilige Seitenausleger an dem Mittelteilrahmen angeordnet ist, als Kugelgelenk ausgebildet ist.

## Beschreibung

Die Erfindung betrifft eine landwirtschaftliche Verteilmaschine gemäß des Oberbegriffes des Patentanspruches 1.

Eine derartige Verteilmaschine ist in der Praxis bekannt. Bei dieser Verteilmaschine besteht das Verteilergestänge aus mehreren um eine senkrechte Achse zueinander einklappbaren Teilsegmenten. Des weiteren ist zwischen dem Mittelrahmen und dem sich an dem Mittelteilrahmen anschließenden ersten Teilelement des Seitenauslegers ein Zwischenelement angeordnet, um die Seitenausleger zu dem Mittelteilrahmen um eine aufrechte Achse einklappen und um eine in Fahrtrichtung verlaufende Achse anwinkeln zu können. Diese Ausbildung des in Art eines Kreuzgelenkes ausgebildeten Zwischenstückes ist sehr aufwendig.

Der Erfindung liegt die Aufgabe zugrunde, ein einfach ausgebildetes unteres Gelenk zur Anlenkung des Seitenauslegers an dem Mittelteilrahmen zu schaffen, welches sowohl das Einfalten wie auch das Anwinkeln des Seitenauslegers ermöglicht.

Diese Aufgabe wird erfindungsgemäß dadurch gelöst, dass das untere Gelenk, mittels welchen der jeweiligen Seitenausleger an dem Mittelteilrahmen angeordnet ist, als Kugelgelenk ausgebildet ist. Infolge dieser Maßnahmen ergibt sich ein einfach ausgebildetes Element, welches ermöglicht, dass der Seitenausleger um eine aufrechte Achse eingeklappt und um eine in Fahrtrichtung verlaufende Achse angewinkelt werden kann.

Durch die Ausbildung des unteren Gelenkes als Kugelgelenk wird erreicht, dass das jeweilige untere Gelenk mittels welchem die jeweiligen Seitenausleger am Mittelteilrahmen angelenkt sind, gleichzeitig eine aufrechte Gelenkachse und eine zumindest in Fahrtrichtung weisende Gelenkachse, bezogen auf die Arbeitsstellung des Verteilergestänges aufweist.

Um sicher zu stellen, dass der Seitenausleger seine gewünschte Lage beibehält und nicht aufgrund der Ausbildung eines Kugelgelenkes ungewollt verschwenken kann, ist vorgesehen, dass das jeweilige obere Gelenkelement, mittels welchem der jeweilige Seitenausleger am Mittelteil angeordnet ist, jeweils über das Anwinkelmittel und einer weiteren Strebe mit dem Mittelteil verbunden ist, und dass das Anwinkelmittel und die Strebe beanstandet zueinander am Mittelteilrahmen angelenkt sind. Somit wird eine vorteilhafte Ausgestaltung und Anlenkung des oberen Gelenkelementes erreicht.

Um Fertigungstoleranzen ausgleichen zu können, ist vorgesehen, dass die Strebe als einstellbare Schraubspindel ausgebildet ist.

Weitere Einzelheiten der Erfindung sind der Beispielbeschreibung und den Zeichnungen zu entnehmen. Hierbei zeigen
- Fig.1: das Verteilergestänge einer landwirtschaftlichen Feldspritze in der Ansicht von hinten in gestreckter Lage und in Prinzipdarstellung,
- Fig. 2: das Verteilergestänge der Feldspritze nach Fig. 1, wobei die Seitenausleger angewinkelt sind,
- Fig. 3: den mittleren Bereich des Verteilergestänges in der Ansicht von hinten und
- Fig. 4: den Mittelbereich des Verteilergestänges in perspektivischer Darstellung, wobei der rechte Seitenausleger angewinkelt ist und der linke Seitenausleger sich in paralleler Lage zur Horizontalen befindet und wobei das untere innere Gelenk mittels welchem die Seitenausleger an dem Mittelteil angelenkt sind, als Einzelteil in vergrößerter Darstellung dargestellt ist.

Das Verteilergestänge 1 ist zur Anordnung an einer nicht dargestellten landwirtschaftlichen Verteilmaschine, die einen Rahmen, Vorratsbehälter aufweist, vorgesehen. Das Verteilergestänge 1 weist ein Mittelrahmenteil 2 und sich hieran seitlich anschließende Seitenausleger 3 und 4 auf. Das Mittelrahmenteil 2 ist über ein Höhenverstellgestänge an dem Rahmen einer Verteilmaschine angeordnet. Die Seitenausleger 3,4 bestehen aus Teilsegmenten 5, die mittels Gelenke 6 miteinander verbunden sind, so dass die Seitenausleger 3,4 in eine Transportstellung zusammenfaltbar sind. Die Seitenausleger 3,4 sind über ein unteres Gelenk 7 und obere Gelenkelemente 8 an dem Mittelrahmenteil 2 angeordnet und über jeweils einen zwischen dem Mittelrahmenteil 2 und dem inneren Teilsegment 5 des jeweiligen Seitenauslegers 3,4 angeordneten Hydraulikzylinder 9 um die durch das untere Gelenk 7 und das obere Gelenkteil 10 der oberen Gelenkelemente 8 verlaufene Gelenkachse 11 ein- und ausfaltbar. Des weiteren ist zwischen dem oberen Gelenkteil 10 und dem Mittelrahmenteil 2 ein vorzugsweise als Hydraulikzylinder 11 ausgebildetes Anwinkelmittel, das Bestandteil der oberen Gelenkelemente 8 ist, zum Anwinkeln des jeweiligen Seitenauslegers 3,4 des Verteilergestänges um eine in Fahrtrichtung weisende Achse 13 zugeordnet. Des weiteren ist zwischen dem oberen inneren Teil des Seitenauslegers 3,4 im Bereich des oberen Gelenkteiles und dem Mittelrahmenteil 2 eine einstellbare Strebe 14, die Bestandteil der oberen Gelenkelemente 8 ist, angeordnet. Das als Hydraulikzylinder 11 ausgebildete Anwinkelmittel und die Strebe 14 sind beabstandet zueinander am Mittelrahmenteil 2 angelenkt. Somit ist das obere Gelenkmittel 8, mittels welchem der jeweilige Seitenausleger 3,4 am Mittelrahmenteil 2 angeordnet ist, jeweils über das Anwinkelmittel 11 und der weiteren Strebe 14 mit dem Mittelrahmenteil 2 verbunden.

Das untere Gelenk 7, mittels welchem das innere Teilsegment 5 des jeweiligen Seitenauslegers 3,4 am Mittelrahmenteil 2 angeordnet ist, ist als Kugelgelenk 15 ausgebildet. Dieses Kugelgelenk 15 weist einen aufrecht verlaufenen Gelenkbolzen 16 auf. Um die Mittelachse 17 dieses Gelenkbolzens 16 ist der Seitenausleger 3,4 in Verbindung mit dem Kugelgelenk 15 einund ausschwenkbar. Des weiteren ist der Seitenausleger 3,4 aufgrund des Kugelgelenkes 15 um eine in Fahrtrichtung 12 weisende Achse 18 bzw. mit anderen Worten ausgedrückt, um eine quer zur Längsachse 17 des Bolzens 16 verlaufene Achse 13 aufgrund der oberen Anlenkung durch die Gelenkelemente 8 des Seitenauslegers 3, 4 gegenüber dem Mittelrahmenteil 2 verschwenkbar.

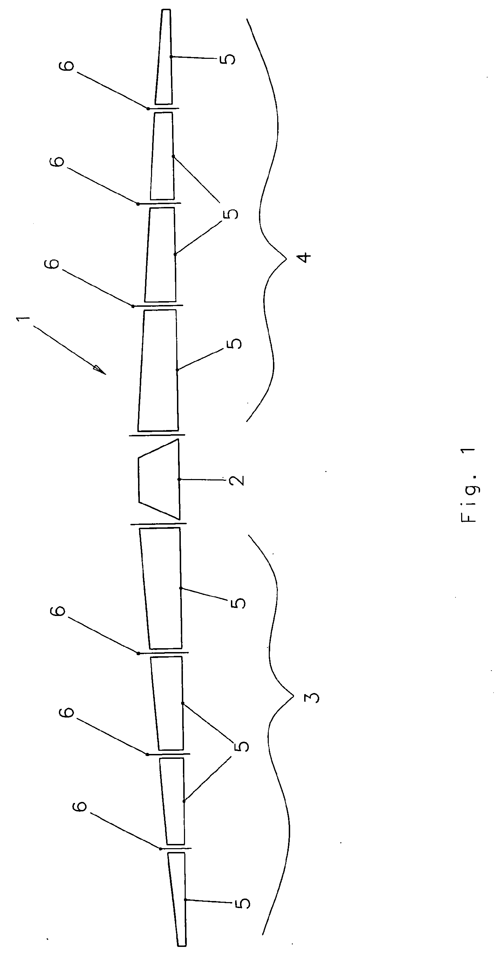

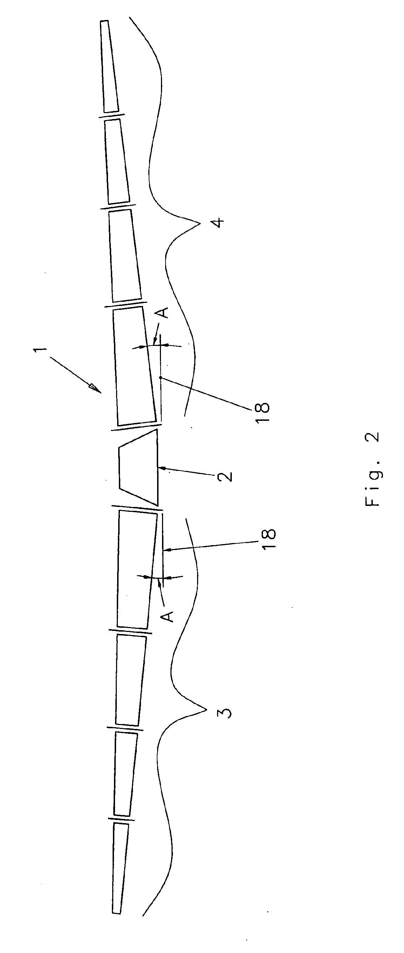

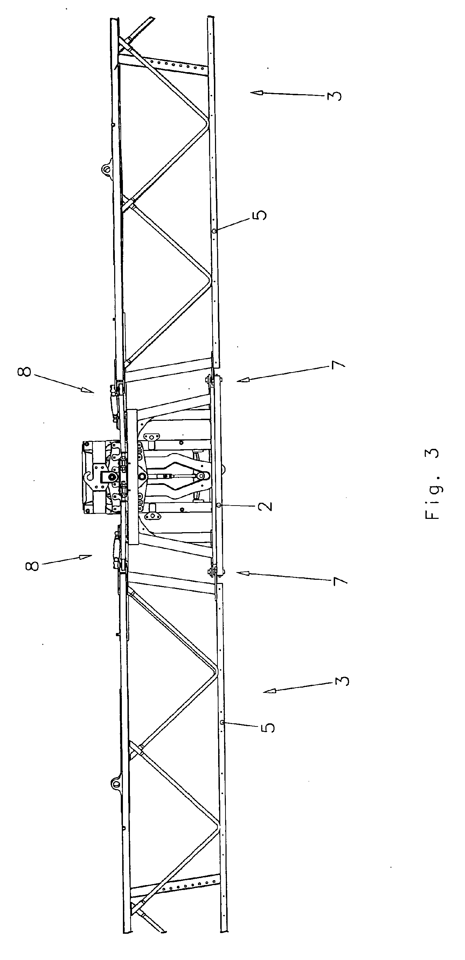

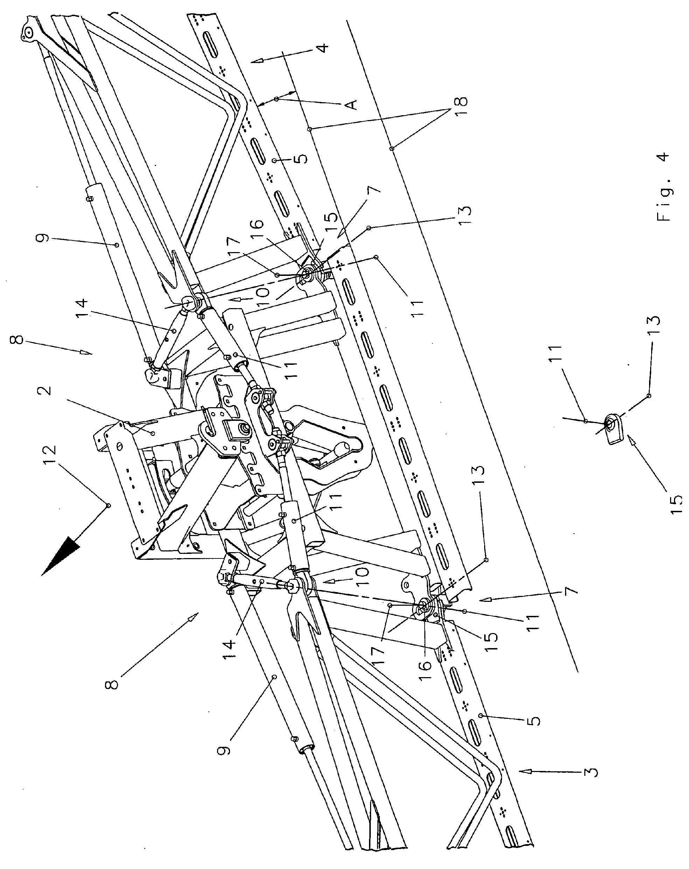

Aufgrund der Ausbildung des unteren Gelenkes 7 als Kugelgelenk 15, mittels welchem der jeweilige Seitenausleger 3, 4 an dem Mittelrahmenteil 2 angelenkt ist, sind die jeweiligen Seitenausleger 3, 4 aus der in Fig. 1 dargestellten gestreckten Lage in die in Fig. 2 dargestellte angewinkelte Lage um den Winkel A gegenüber der Horizontalen 18 anzuwinkeln. In den Fig. 3 und 4 ist jeweils der linke Seitenausleger 3 in gestreckter Lage entsprechend Fig. 1 dargestellt, während der rechte Ausleger 4 entsprechend Fig. 2 in der Fig. 4 angewinkelt ist.

Das Anwinkeln geschieht dadurch, dass mittels des Hydraulikzylinders 11 der obere Gelenkteil 10 in Richtung des Mittelrahmenteils 2 gezogen wird, d.h. der Hydraulikzylinder 11 wird eingefahren. Um gleichzeitig zu verhindern, dass durch diese Anwinkelbewegung des Seitenauslegers 3, 4 der jeweilige Seitenausleger 3, 4 nicht eine Tendenz zum Einfalten aufweist, wird der Hydraulikzylinder 9 ausgefahren. Hierzu sind die Hydraulikzylinder 9 und 11 über nicht dargestellte Leitungen mit einer nicht dargestellten Schaltung verbunden, so dass beim Betätigen des als "Einwinkelzylinders" wirkende Hydraulikzylinder 11 gleichzeitig der als Einfaltzylinder wirkende Hydraulikzylinder 9 ausgefahren wird.

Aufgrund der Ausbildung des unteren Gelenkes 7 als Kugelgelenk 15 ist es nicht erforderlich, einen aufwendigen Zwischenrahmen zwischen dem Mittelrahmenteil 2 und dem Seitenausleger 3, 4 vorzusehen, um das Einwinkeln zu ermöglichen. Das Kugelgelenk 15 übernimmt somit gleichzeitig die Funktion eines Gelenkes beim Einwinkeln, wie auch die Funktion eines Gelenkes beim Ein- und Ausfalten der Seitenausleger 3, 4 des Verteilergestänges 1.

## Patentansprüche

1. Landwirtschaftliche Verteilmaschine mit einem Rahmen, Vorratsbehälter und Verteilergestänge, welches in eine sich quer zur Fahrtrichtung erstreckende gestreckte Arbeitsstellung und in eine zusammengefaltete Transportstellung bringbar ist und aus einem am Rahmen höhenverstellbar angeordneten Mittelteilrahmen und sich hieran beiderseits mittels Gelenken angeordneten und zusammenfaltbaren Seitenauslegern besteht, wobei zwischen dem Mittelteilrahmen und jedem Seitenausleger jeweils ein vorzugsweise als Hydraulikzylinder ausgebildete Stellelement zum Ein- und Ausfalten des Seitenauslegers angeordnet ist und jedem Seitenausleger ein vorzugsweise als Hydraulikzylinder ausgebildetes Anwinkelmittel zum Anwinkeln des Seitenauslegers um eine in Fahrtrichtung verweisende Achse zugeordnet ist, **dadurch gekennzeichnet, dass** das untere Gelenk (7), mittels welchen der jeweilige Seitenausleger (3,4) an dem Mittelteilrahmen (2) angeordnet ist, als Kugelgelenk (15) ausgebildet ist.

2. Verteilmaschine nach Anspruch 1, **dadurch gekennzeichnet, dass** das jeweilige untere Gelenk (7) mittels welchem die jeweiligen Seitenausleger (3,4),am Mittelteilrahmen (2) angelenkt sind, eine aufrechte Gelenkachse (17) und eine zumindest in Fahrtrichtung weisende Gelenkachse (13), bezogen auf die Arbeitsstellung des Verteilergestänges (1) aufweist.

3. Verteilmaschine nach Anspruch 1, **dadurch gekennzeichnet, dass** das jeweilige obere Gelenkelement (8), mittels welchem der jeweilige Seitenausleger (3,4) am Mittelteil (2) angeordnet ist, jeweils über das Anwinkelmittel (11) und einer weiteren Strebe (14) mit dem Mittelteil (2) verbunden ist, und dass das Anwinkelmittel (11) und die Strebe (14) beanstandet zueinander am Mittelteilrahmen (2) angelenkt sind.

4. Verteilmaschine nach Anspruch 1, **dadurch gekennzeichnet, dass** die Strebe (14) als einstellbare Schraubspindel ausgebildet ist.
